# EUROPEAN PATENT APPLICATION

(11) **EP 2 133 310 A1**
(43) Date of publication of application: **16.12.2009**
(21) Application number: 08718477.6
(22) Date of filing: 07.03.2008
(51) Int. Cl.: C01F 11/46

(54) **GYPSUM STABILISATION METHOD**

(30) Priority: 12.03.2007 ES 200700639
(71) Applicant: Endesa Generación, S.A., 41004 Sevilla (ES)
(72) Inventor: ÁLVAREZ AYUSO, Esther, E-41004 Sevilla (ES); QUEROL CARCELLER, Javier, E-41004 Sevilla (ES); BALLESTEROS APARICIO, Juan Carlos, E-Sevilla 41004 (ES); JIMÉNEZ ALONSO, Antonio, E-41004 Sevilla (ES); TOMÁS TELLO, Alfedro, E-41004 Sevilla (ES)
(74) Representative: Pons Ariño, Angel
(86) International application number: PCT/ES2008/070041
(87) International publication number: WO 2008/110652

(57) **Abstract**

The present invention relates to a process for reducing or eliminating the soluble content of pollutants in gypsum or in compounds containing gypsum, wherein the gypsum or gypsum-containing compound is mixed with additives that contain or are capable of generating aluminium oxide. More specifically, the gypsum originates from gas desulphurisation and the pollutant is fluoride.

## Description

The present invention relates to a process for reducing or eliminating the soluble content of pollutants in gypsum or in compounds containing gypsum, wherein the gypsum or the compound containing gypsum is mixed with additives that contain or are capable of generating aluminium oxide. More specifically, the gypsum originates from gas desulphurisation and the pollutant is fluorine.

### PRIOR STATE OF THE ART

At present, 100-MWt combustion facilities must fulfil strict SO₂ emission limits. In this manner, over the last fifteen years, a large number of thermal coal-fired power plants have equipped their facilities with desulphurisation plants which generate desulphurisation by-products, in order to fulfil the applicable regulations relative to SO₂ emissions into the atmosphere, thereby protecting the environment against the formation of acid rain and its consequences (accelerated soil acidification, forest degradation, etc.). This increase in the desulphurisation levels of thermal power plant gases prior to their release into the atmosphere entails an increase in the volume of desulphurisation by-products.

Although there are different types of desulphurisation processes applicable to this purpose, the one most widely used (accounting for approximately 80% of market share), given its consistency and the high level of desulphurisation it achieves, is the limestone-based wet desulphurisation process. During this process, SO₂ is removed from combustion gases by absorption in milk of lime, and it is subsequently converted, by oxidisation, to sulphate, then extracted from the absorbent as gypsum slurry and finally filtered, producing desulphurisation gypsum. The reaction that takes place during the limestone-based wet desulphurisation process can be summed up in the following reaction:

CaCO₃(s) + SO₂(g) + ½ O₂(g) + 2 H₂O(I) → CaSO₄ · 2H₂O(s) + CO₂(g)

Taking this into account, it must be pointed out that the milk of lime used in the previously described desulphurisation process acts as a retention system not only for sulphur, but also for other volatile elements such as fluorine, chlorine, arsenic, selenium and mercury present in the gaseous emissions of thermal coal-fired power plants or condensed over the particulate matter not retained by the electrostatic precipitators, as in the case of toxic trace elements such as Cd, Cr, Cu, Ni, Pb, Zn, Ba, Sb or Mo, contained in said particulate matter.

A recent study on the environmental characterisation of the by-products of thermal coal combustion power plants (Cf. E. Álvarez-Ayuso et al., 2006 Chemosphere, vol. 65, pages 2009-2017) has revealed that desulphurisation gypsum is characterised as being an acceptable material in non-hazardous waste disposal sites. Despite this characterisation, based on the leachable content of the elements of potential environmental risk, the aforementioned study also determined that the leachable fluorine content of desulphurisation gypsum is very close to the corresponding desulphurisation gypsum acceptance limit (150 mg/kg) in non-hazardous waste disposal sites.

This aspect involves both environmental risk and high waste management costs for thermal power plants in the event that said limit is exceeded, and desulphurisation gypsum is characterised as being a material acceptable only in hazardous waste disposal sites.

Therefore, measures for the stabilisation of desulphurisation gypsum for deposit thereof at waste disposal sites, or other applications, minimising the leaching of minor and trace pollutants such as fluorine, become necessary.

### EXPLANATION OF THE INVENTION

The present invention relates to a gypsum stabilisation process, in particular to the gypsum generated in the desulphurisation process of thermal coal-fired power plants, for deposit thereof at waste disposal sites or use as filling material in mine rehabilitation or other applications.

This stabilisation process has the objective of reducing the leaching of minor or trace pollutants, such as for example, the fluorine present in desulphurisation gypsum, ensuring the characterisation of this by-product as an acceptable material in non-hazardous waste disposal sites pursuant to the legislation currently in force (Decision 2003/33/EC), thereby reducing the corresponding environmental risks and economic implications that the management of waste characterised as only being acceptable in hazardous waste disposal sites would entail for thermal power plants.

The solution provided by this invention is based on the use of products that contain or generate aluminium oxide, in particular amorphous aluminium oxide, as additives prior to pouring desulphurisation gypsum or formation thereof on the desulphurisation plant absorbent. Amorphous aluminium oxide is capable of immobilising a considerable amount of minor and trace pollutants, such as fluorine, by means of superficial adsorption processes, achieving a significant reduction in leaching thereof, thereby avoiding the consequences entailed by leaching thereof during the pouring of desulphurisation gypsum.

The gypsum generated in the desulphurisation plants of thermal power plants basically consists of this mineral (CaSO₄·2H₂O), although accompanied, but in much smaller amount, by other minerals resulting from the interaction of other components (other than SO₂) present in the gaseous emissions of thermal coal-fired power plants and from the milk of lime present in the desulphurisation plant absorbent. Thus, fluorine retained by the milk of lime is present in desulphurisation gypsum in the form of fluorite (CaF₂), the dissolution of this mineral being responsible for fluorine leaching from desulphurisation gypsum.

Therefore, one aspect of the present invention relates to a process for reducing or eliminating the soluble content of pollutants and, therefore, of their leaching fraction. Said pollutants (see Table 1) are capable of reacting with the aluminium oxide by means of adsorption processes. More preferably, the pollutant is fluorine.

In the process of the invention, the gypsum or compounds containing gypsum are mixed with additives that contain or are capable of generating aluminium oxide.

In a preferred embodiment, the gypsum (or compounds containing gypsum) originates from desulphurisation processes. In these desulphurisation processes, gypsum-rich by-products are mixed, before or after the desulphurisation process, with the additives that contain or are capable of generating aluminium oxide in the desulphurisation plant absorbent.

Thus, the mixture of aluminium oxide-generating additives with desulphurisation gypsum can be prepared prior to the pouring thereof, i.e. after the milk of lime filtering stage.

Any known mixing process that achieves a more or less homogeneous distribution of both components (desulphurisation gypsums and additives), may be adequate for carrying out this stage, wherein an immobilising agent of minor and trace pollutants, such as fluorine, is incorporated into desulphurisation gypsum. Another advantage is that, after the incorporation thereof, the mixture does not require any other treatment, nor is any waiting time required subsequent to mixing and prior to pouring.

In another preferred embodiment of the present invention, the aluminium oxide-generating additive may be incorporated into the desulphurisation plant absorbent prior to the formation of desulphurisation gypsum, provided that the amount to be incorporated is sufficiently small so as not to alter the desulphurisation process in itself nor the pH conditions required during the desulphurisation stage, which will be determined by the type of additive to be incorporated for the purpose of immobilising minor and trace pollutants such as fluorine.

In another preferred embodiment of the process of the present invention, the additives are materials that contain or generate aluminium oxide and are selected from among aluminium oxide, ashes generated by thermal coal-fired power plants, aluminium salts (or soluble aluminium-releasing species) or compounds containing pre-hydrolysed forms of aluminium. More preferably, the aluminium oxide contained or generated in these materials is amorphous.

Amorphous aluminium oxide has a large number of hydroxile groups on its surface, which can give rise to the adsorption processes of different elements, and particularly halides with high electro-negativity, as in the specific case of fluoride. Amorphous aluminium oxide is present to a large degree in the ashes generated by thermal coal-fired power plants. Generally, the main constituent component of these ashes is glass, which is precisely where the amorphous aluminium oxide is found.

Additionally, amorphous aluminium oxide can be easily produced from aluminium salt solutions (or soluble aluminium-releasing species) through the neutralisation thereof, thereby giving rise to the precipitation of said oxide. Examples of preferred aluminium salts include, but are not limited to, sulphates, chlorides and bicarbonates.

The amount of amorphous aluminium oxide that must be incorporated to stabilise desulphurisation gypsum may vary to a large degree depending on the desired immobilisation levels of minor and trace pollutants (such as for example, fluorine), and may range from very low incorporation values (0.02-0.1 %) to still relatively low values of around 5%; the percentage of immobilised minor and trace pollutants, such as fluorine, increases in proportion to the percentage of amorphous aluminium oxide incorporated.

Nevertheless, the incorporation values of amorphous aluminium oxide (and therefore the immobilisation levels of trace pollutants such as fluorine) depend on the source of amorphous aluminium oxide supply, which means that the incorporation levels of amorphous aluminium oxide may increase, Thus, the incorporation level of amorphous aluminium oxide will be determined by the desired immobilisation level of minor and trace pollutants, such as fluorine, and by the source of amorphous aluminium oxide supply.

Therefore, in a preferred embodiment of the process of the invention, the amount of pure aluminium oxide used in the total mixture varies in accordance with the desired reduction of the leachable fraction of pollutant. Preferably, the amount of aluminium oxide to be used is less than or equal to 10% by weight of the total mixture and more preferably less than or equal to 5%. If ashes generated by thermal coal-fired power plants are used, the amount of ashes to be used is less than or equal to 60% by weight of the total mixture, preferably an amount less than or equal to 5% by weight of the total mixture. If aluminium salts are used and, more particularly, aluminium sulphate, the amount of aluminium salts to be used is less than or equal to 20% by weight of the total mixture. In particular, an amount less than or equal to 15% by weight of the total mixture.

A second aspect relates to the gypsum or the compounds containing gypsum that can be obtained by means of the process described in the present invention.

A third aspect of the present invention relates to the use of gypsum or of compounds containing gypsum as construction material or for use as a filling material in mine rehabilitation. In addition to these applications, it can also be transported to and deposited at waste disposal sites.

Throughout this description and the claims, the word "comprises" and its variants are not meant to exclude other technical characteristics, additives, components or steps. For persons skilled in the art, other objects, advantages and characteristics of the invention will be partially inferred from the description and partially from the practical use of the invention. The following examples have been provided for illustrative purposes, and do not aim to be limiting of the present invention.

### EXAMPLES

### EXAMPLE 1.- Production of desulphurisation gypsum.

The desulphurisation of the gases emitted by part of a thermal coal-fired power plant gave rise to desulphurisation gypsum. The leachable content of said desulphurisation gypsum obtained from the desulphurisation of environmental risk elements envisaged in Decision 2003/33/EC and determined in accordance with European standard EN 12457-4, as established in said Decision, are shown in Table 1.

According to European standard EN 12457-4, leaching studies involve an agitation period of 24 hours using deionised water as an extractant liquid in a liquid/solid ratio of 10 l/kg of dry mass. Based on the leaching studies, Decision 2003/33/EC classifies the waste for acceptance thereof at waste disposal sites. According to this classification, and taking into account the leachable content of trace pollutants, a material is acceptable at non-hazardous waste disposal sites if the leachable content of trace pollutants does not exceed certain limits (for example, in the case of fluorine this limit is established at 150 mg/kg of dry mass). Based on the leachable content of minor and trace pollutants in non-stabilised DESULPHURISATION gypsum subject to stabilisation processes, it can be characterised for acceptance thereof at waste disposal sites, in addition to the immobilisation percentages of trace pollutants such as fluorine achieved by the stabilisation treatments carried out.

The cut-off values for the leachable content of the aforementioned elements established in Decision 2003/33/EC for the acceptance of a material at non-hazardous waste disposal sites are also shown in Table 1.

**Table 1**

| Component | Desulphurisation gypsum | Cut-off value (mg/kg dry mass) |
|---|---|---|
| As | 0.022 | 2 |
| Ba | 0.27 | 100 |
| Cd | 0.004 | 1 |
| Cr | < 0.001 | 10 |
| Cu | 0.013 | 50 |
| Hg | < 0.001 | 0.2 |
| Mo | 0.078 | 10 |
| Ni | 0.081 | 10 |
| Pb | < 0.001 | 10 |
| Sb | < 0.001 | 0.7 |
| Se | 0.43 | 0.5 |
| Zn | 0.037 | 50 |
| Chloride | 171 | 15000 |
| Fluoride | 147 | 150 |
| Sulphate | 19600 | 20000 |

### EXAMPLE 2.- Production of pure amorphous aluminium oxide.

The pure amorphous aluminium oxide used to stabilise desulphurisation gypsum was synthesised in the following manner: a 2M NaOH solution was slowly added to a 1.5 M AlCl₃ solution in a volume ratio of 2:1 under continuous agitation. The resulting precipitate was repeatedly washed with deionised water, filtered and dried at 70ºC for 24 hours. The solid precipitate was characterised as amorphous aluminium oxide by X-ray diffraction (DRX).

Stabilisation of desulphurisation gypsum using pure amorphous aluminium oxide as additive.- Increasing amounts of pure amorphous aluminium oxide were incorporated into different representative samples of desulphurisation gypsum, obtaining samples with amorphous aluminium oxide/desulphurisation gypsum ratios comprised within the range of 0.02-5%.

The samples were homogenised by agitation thereof using a tumbling shaker (10 rpm) for five minutes. Subsequently, the samples thus treated were evaluated in terms of their leaching behaviour in accordance with European standard EN 12457-4. The leachable fluorine content of the different samples treated, as in the case of the fluorine immobilisation percentage achieved with respect to untreated desulphurisation gypsum is shown in Table 2.

**Table 2**

| Pure amorphous aluminium oxide added to desulphurisation gypsum (%) | Leachable fluorine content (mg/kg dry mass) | Immobilised fluorine (%) |
|---|---|---|
| 0.02 | 143 | 2.7 |
| 0.1 | 139 | 5.4 |
| 0.5 | 110 | 25 |
| 1.0 | 87 | 41 |
| 1.5 | 62 | 58 |
| 2.0 | 37 | 75 |
| 5.0 | 10 | 93 |

The results reveal that pure amorphous aluminium oxide homogeneously added to desulphurisation gypsum is capable of immobilising the fluorine contained thereof, thereby reducing the leachable fluorine content.

The immobilisation levels, and therefore the leachable fluorine content reduction levels, depend on the percentage of pure amorphous aluminium oxide added. Immobilisation levels higher than 90% are obtained using 5% doses of pure amorphous aluminium oxide, reducing the leachable fluorine content to values of 10 mg/kg.

### EXAMPLE 3.- Production of ashes generated by thermal coal-fired power plants.

Coal combustion in thermal power plants gave rise to coal combustion ashes. Said ashes were used in the stabilisation of desulphurisation gypsum. Analysis by X-ray diffraction thereon determined that they were composed mainly of glass, quartz, mullite and magnetite, wherein the vitreous phase was the most common (>80%). The amorphous aluminium oxide is found in this phase.

### 3.1.- Stabilisation of desulphurisation gypsum using ashes generated by thermal coal-fired power plants as an additive.

Increasing amounts of coal combustion ashes were incorporated into different representative desulphurisation gypsum samples, obtaining samples with ash/desulphurisation gypsum ratios comprised within the range of 1-50%. The samples were homogenised by agitation thereof using a tumbling agitator (10 rpm) for five minutes. Subsequently, the samples thus treated were evaluated in terms of their leaching behaviour, in accordance with European standard EN 12457-4. The leachable fluorine content of the various samples treated, as in the case of the fluorine immobilisation percentage achieved with respect to the untreated desulphurisation gypsum, is shown in Table 3.

**Table 3**

| Ashes added to desulphurisation gypsum (%) | Leachable fluorine content (mg/kg dry mass) | Immobilised fluorine (%) |
|---|---|---|
| 1 | 111 | 24 |
| 5 | 90 | 39 |
| 10 | 90 | 39 |
| 25 | 88 | 40 |
| 50 | 84 | 43 |

The results reveal that coal combustion ashes homogeneously added to desulphurisation gypsum are capable of partially immobilising the fluorine contained therein, thereby reducing leachable fluorine content. Significant fluorine immobilisation levels (39%) were achieved when the percentage of ashes incorporated to the desulphurisation gypsum (5%) was relatively low, thereby reducing the leachable fluorine content to values of 90 mg/kg. The higher percentage of ashes incorporated into the desulphurisation gypsum increased immobilised fluorine levels, due to which the leachable fluorine content was reduced, although this increase was not very significant.

### EXAMPLE 4.- Production of aluminium sulphate.

The aluminium sulphate used in desulphurisation gypsum stabilisation was commercial Al₂(SO₄)₃·18 H₂O.

### 4.1.- Stabilisation of desulphurisation gypsum through the use of aluminium sulphate as an additive.

Increasing amounts of aluminium sulphate were incorporated into different representative desulphurisation gypsum samples, obtaining samples with aluminium sulphate/desulphurisation gypsum ratios comprised within the range of 0.1-15%. The samples were homogenised by agitation thereof using a tumbling agitator (10 rpm) for five minutes. Subsequently, the samples thus treated were evaluated in terms of their leaching behaviour, in accordance with European standard EN 12457-4. The fluorine-leachable content of the different treated samples, as in the case of the fluorine immobilisation percentage achieved with respect to the untreated desulphurisation gypsum, is shown in Table 4.

**Table 4**

| Aluminium sulphate added to desulphurisation gypsum (%) | Leachable fluorine content (mg/kg dry mass) | Immobilised fluorine (%) |
|---|---|---|
| 0.1 | 109 | 26 |
| 1 | 47 | 68 |
| 5 | 12 | 92 |
| 10 | n.d. (< 0.2) | > 99 |
| 15 | n.d. (< 0.2) | > 99 |

| | | |
|---|---|---|
| Where n.d. stands for not detectable. | | |

The results reveal that aluminium sulphate homogeneously added to desulphurisation gypsum is capable of immobilising the fluorine contained therein, thereby reducing leachable fluorine content. The immobilisation levels, and therefore the leachable fluorine content reduction levels, depend on the percentage of aluminium sulphate added. Immobilisation levels higher than 90% were obtained using 5% doses of aluminium sulphate, lowering the leachable fluorine content to values of 12 mg/kg.

## Claims

1. Process for reducing or eliminating the soluble content of pollutants in gypsum or compounds containing gypsum, wherein the gypsum or the compound containing gypsum is mixed with additives that contain or are capable of generating aluminium oxide.

2. Process, according to claim 1, wherein the pollutant is fluorine.

3. Process, according to any of claims 1 or 2, wherein the gypsum or the compounds containing gypsum are generated from a gas desulphurisation process.

4. Process, according to any of clams 1 to 3, wherein the mixing with additives takes place before or after the desulphurisation process during which the gypsum or the compounds containing gypsum are formed.

5. Process, according to any of claims 1 to 4, wherein the additives are selected from among the group comprising:
a. Aluminium oxide;
b. Ashes generated by thermal coal-fired power plants;
c. Aluminium salts; or
any combination thereof.

6. Process, according to any of claims 1 to 5, wherein the amount of aluminium oxide to be used is less than or equal to 10% by weight of the total mixture.

7. Process, according to any of claims 1 to 5, wherein the amount of ashes to be used is less than or equal to 60% by weight of the total mixture.

8. Process, according to any of claims 1 to 5, wherein the aluminium salts are aluminium sulphates.

9. Process, according to any of claims 5 or 8, wherein the amount of aluminium salts to be used is less than or equal to 20% by weight of the total mixture.

10. Gypsum or compounds containing gypsum obtainable by means of the process, according to any of claims 1 to 9.

11. Use of gypsum or of compounds containing gypsum, according to claim 10, as construction material.

12. Use of gypsum or of compounds containing gypsum, according to any of claims 10 or 11, as filling material in mine restoration.
